# EUROPEAN PATENT SPECIFICATION

(11) **EP 0 598 603 B1**
(45) Date of publication and mention of the grant of the patent: **07.06.2000**
(21) Application number: 93309165.4
(22) Date of filing: 17.11.1993
(51) Int. Cl.: C08J 3/00, C08L 69/00

(54) **Method of dispersing solid polytetrafluoroethylene in polymeric resins**
Verfahren zur Verteilung von festem Polytetrafluoroethylen in Kunststoffen
Procédé pour disperser du polytétrafluoroéthylène dans les résines polymères

(30) Priority: 17.11.1992 US 977346
(43) Date of publication of application: 25.05.1994
(73) Proprietor: GENERAL ELECTRIC COMPANY, Schenectady, NY 12345 (US)
(72) Inventor: Pan, Wie-Hin, Evansville, Indiana 47712 (US); Davis, Gary Charles, Albany, New York 12205 (US); Shanklin, Elliott West, Altamont, New York 12009 (US); Buckley, Paul William, Scotia, New York 12302 (US)
(74) Representative: Szary, Anne Catherine, Dr.

(56) References cited:
- EP-A- 0 269 950
- FR-A- 890 326
- US-A- 3 215 663
- US-A- 4 153 639

## Description

The invention relate to processes for dispersing a solid polytetrafluoroethylene additive in mixtures with synthetic, thermoplastic, polymeric resins and in one embodiment concerns dispersing solid polytetrafluoroethylene additive into particulated polycarbonate resins.

The patent literature is replete with descriptions of methods and processes for preparing homogeneous mixtures of synthetic polymeric resins with a wide variety of solid phase additives. Representative of such descriptions is that set forth in the U.S. Patent 4,649,168 (Kress et al.) issued on March 10, 1987. Kress et al. disperses particles of polytetrafluoroethylene (hereinafter referred to for convenience as "PTFE") in aromatic polycarbonate resin based molding compositions. The dispersion is carried out, in brief, by admixture of aqueous emulsions of the two components followed by coagulation of the emulsion mixture. Coagulation may be carried out by spray-drying, freeze-drying or the addition of inorganic or organic salts, acids, bases or organic solvents which are miscible with water.

The process described by Kress et al. does result in fine dispersions of the PTFE in the polycarbonate resin, but the degree of dispersion is dependent upon a number of variables, which require close control. For example, when two aqueous emulsions are mixed together, the way that these two emulsions will mix will be predominantly determined by the interactions of each of the suspended particulates with the water phase that they are emulsified with. This means that the surfactants necessarily used in each phase become dominant factors. During the process of coagulation, control of the dispersion of these two emulsions will become increasingly controlled by the interactions of the surfaces of the PTFE particle with the polymer resin particle. Since it is well known that like tends to repel like, there is an inherent driving force to cause segregation of these two mixed emulsions during coagulation.

Furthermore, when water is added to a resin powder the water becomes physically bound to and wets the surface of the powder. The amount of water that will be physically bound to this surface will be determined by the free energy characteristics of the powder surfaces, the amount of surface area available, and the free energy of interaction between water and this surface. Adding a water based emulsion of PTFE to an insufficiently wetted powder will result in the water immediately being stripped from the added emulsion, as long as the amount of water added is less than the saturation capability of the powder. This will result in an effective coagulation of the PTFE emulsion, because the emulsion cannot exist when the water is stripped from it. Since each particle of resin powder has a defined saturation potential for water, this will result in each resin powder particle only reacting with the water in a very small, defined amount of emulsion. This means that there is a forcing of coagulation of the PTFE emulsion on a distance scale determined by the water wetting characteristics of the resin powder. It also means that this will provide an extraordinary lack of dispersion of the PTFE because as soon as the surface of a particle of resin powder has been saturated or wetted out by water it no longer will have any capability to cause the coagulation of any more PTFE emulsion. This then becomes a physical limiting factor that will guarantee that the PTFE will be dispersed in the powder at a distance scale corresponding to the size of the PTFE emulsion size.

The process of the present invention is particularly advantageous in that the variables for controlling dispersion are limited. The process of our invention is simple, resulting in consistently good high dispersions on a scale not previously experienced. The highly homogeneous dispersions obtained produce products of a unique character and with superior properties. High proportions of additive are uniformly dispersed, without sacrificing mechanical properties. For example in regard to dispersing PTFE in polycarbonate resins, higher concentrations of the PTFE can be dispersed without difficulty and without compromising mechanical properties.

In one embodiment process of the present invention incorporates PTFE into the particle structure of porous polycarbonate resins. Early processes for incorporating PTFE into polycarbonate resins included admixture and processing of the polycarbonate and the PTFE (in a latex) in a ball mill, a rubber mill, an extruder or a Banbury mixer; see for example the description in U.S. Patent 3,294,871.

More recently, it has been found advantageous to combine the PTFE and a polycarbonate resin by co-precipitation of the two resins. This was said to result in the ultimate in dispersion of the PTFE into the polycarbonate resin; see the description in the U.S. Patent 4,753,994 (Carter, Jr. et al., issued June 28, 1988).

In this teaching, an aqueous dispersion of PTFE is admixed with a solution of polycarbonate resin and caused to co-precipitate by the addition of an ester, aromatic hydrocarbon, aliphatic hydrocarbon, alcohol, carbonate, ether or ketone. The coprecipitate then needs to be isolated, washed and dried in a somewhat costly recovery.

US-A-4543377 discloses a process for the incorporation of a fibrous material into an organic polymer which comprises providing a solution of the polymer in an organic solvent in which the fibrous material is insoluble and which is essentially immiscible with water, providing a dispersion of the fibrous material in water, adding the aqueous dispersion of the fibrous material to the agitated solution of the polymer, agitating the mixture whereby the fibrous material transfers from the aqueous phase to the organic solvent phase, coagulating the mixture of polymer and fibrous material from the organic solvent containing them by contact with steam and/or hot water, and recovering and drying the polymer-fibrous material mixture.

However, these prior art processes do not yield products with the unique properties, especially in maintaining mechanical properties, associated with the products of our inventive process which is inherently simpler, less time consuming and less costly.

The invention comprises a process for incorporating a solid PTFE additive in a highly dispersed manner into particles of a thermoplastic, synthetic, polymeric resin, which comprises;
providing a fluid mixture of the PTFE additive;
providing a solution of the polymeric resin;
admixing the PTFE additive mixture with the polymeric resin solution; and
removing the fluid and the solvent from the admixture simultaneously, whereby there is a
co-precipitation of the PTFE additive and the polymeric resin powder from the admixture.

The invention also comprises the thermoplastic resin composition products of the process of the invention, blends thereof with thermoplastic resins including blends of two or more thermoplastic polymeric resins, and articles molded therefrom, such as thermoformable extruded sheet.

### DETAILED DESCRIPTION OF THE PREFERRED EMBODIMENTS OF THE INVENTION

The process of the invention may be employed to highly disperse PTFE solid additive in a wide variety of thermoplastic, synthetic polymeric resins. Representative of such resins are organic polymers available in particle forms, characterized by chains of carbon atoms which may also contain polar groups as connecting links in the chains. Illustrative of such polymers are those of the general formula:-

(̵ A - B )̵ₙ

wherein n is an integer, greater than about 50. A is a divalent hydrocarbon moiety having a formula selected from 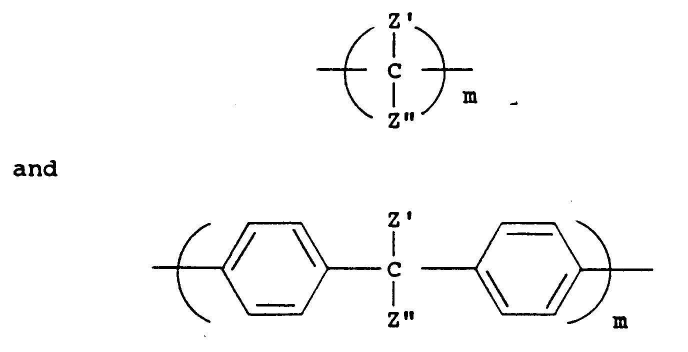 wherein m is an integer of between 1 and 20 and Z' and Z'' are each selected from hydrogen and alkyl; and B is a divalent connecting link selected from radicals which are represented by the formulae: 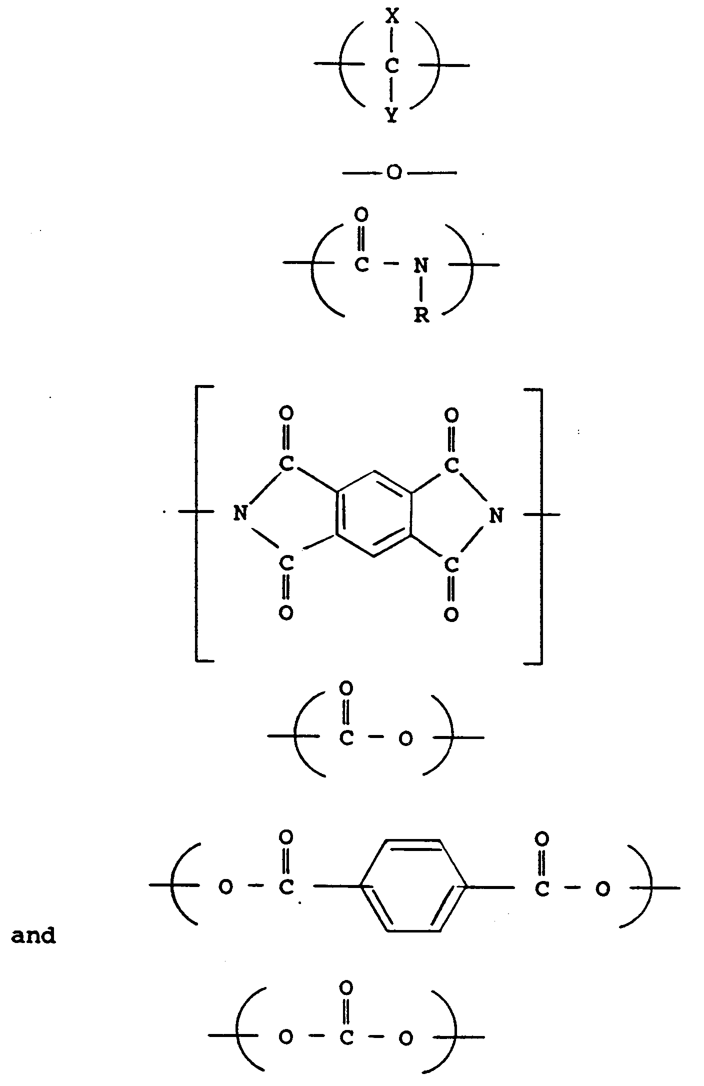 wherein X is selected from the group consisting of hydrogen, alkyl, aryl, and halogen, Y is selected from hydrogen, halogen, nitrile, carboxylate ester, alkoxy and acetal, and R is selected from hydrogen, alkyl, aryl, alkaryl, and alkoxymethyl. The normally rigid thermoplastic resins included within this definition include hydrocarbon polymers such as polyethylene, other polyolefins and copolymers of ethylene and 1-olefins, polystyrene, polyvinyl halides, polyvinylidene halides, polyacrylates, including inter alia polymethylmethacrylate, linear polycarbonamides made by the intermolecular polymerization of linear diamines containing from 6 to 10 carbon atoms and their amide-forming derivatives and the superpolyamides made by the intramolecular polymerization of omega-amino acids containing from 4 to 12 carbon atoms and their amide-forming derivatives, such as polyhexamethyleneadipamide, polyhexamethylenesebacamide, and polycaprolactam, polycarbonimides, polyethers, polycarbonates and polyoxyalkalenes, particularly high molecular weight, thermally-stable polyoxymethylene.

Although the process of the invention is applicable to the wide variety of synthetic polymeric resins mentioned above, the remaining description will be confined to a discussion of polycarbonate resins as illustrative, for the purpose of convenience and simplicity. The process is particularly advantageous when used to process aromatic polycarbonate resins, including copolyester-carbonate resins.

Polycarbonate and copolyester-carbonates are well known resins, commercially available. Methods of preparing polycarbonates by interfacial polymerization are also well known; see for example the details provided in the U.S. Patents 3,028,365; 3,334,154; 3,275,601; 3,915,926; 3,030,331; 3,169,121; 3,027,814; and 4,188,314, all of which are incorporated herein by reference thereto.

In general, the method of interfacial polymerization comprises the reaction of a dihydric phenol with a carbonyl halide (the carbonate precursor).

Although the reaction conditions of the preparative processes may vary, several of the referred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins comprises a phosgenation reaction. The temperature at which the phosgenation reaction proceeds may vary from below 0°C, to above 100°C. The phosgenation reaction preferably proceeds at temperatures of from room temperatures (25°C) to 50°C. Since the reaction is exothermic, the rate of phosgene addition may be used to control the reaction temperature. The amount of phosgene required will generally depend upon the amount of the dihydric phenols.

The dihydric phenols employed are known, and the reactive groups are the two phenolic hydroxyl groups. Some of the dihydric phenols are represented by the general formula: 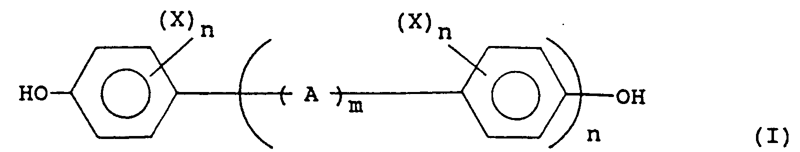 wherein A is a divalent hydrocarbon radical containing from 1 to about 15 carbon atoms; a substituted divalent hydrocarbon radical containing from 1 to about 15 carbon atoms and substituent groups such as halogen; -S- ; -SS-; -S(O)- ; -S(O)₂ ; -O- : or -C- ; each X is independently selected from the group consisting of hydrogen, halogen, and a monovalent hydrocarbon radical such as an alkyl group of from 1 to about 8 carbon atoms, an aryl group of from 6-18 carbon atoms, an aralkyl group of from 7 to about 14 carbon atoms, an alkaryl group of from 7 to about 14 carbon atoms, an alkoxy group of from 1 to about 8 carbon atoms, or an aryloxy group of from 6 to 18 carbon atoms; and m is zero or 1 and n is an integer of from 0 to 4.

Typical of some of the dihydric phenols employed are bis-phenols such as bis(4-hydroxyphenyl)methane, 2,2-bis(4-hydroxyphenyl)propane (also known as bisphenol-A), 2,2-bis(4-hydroxy-3,5-dibromophenyl)propane; dihydric phenol ethers such as bis(4-hydroxyphenyl) ether, bis(3,5-dichloro-4-hydroxyphenyl) ether; dihydroxydiphenyls such as p,p'-dihydroxydiphenyl, 3,3'-dichloro-4,4'-dihydroxydiphenyl; dihydroxyaryl sulfones such as bis(4-hydroxyphenyl) sulfone, bis (3,5-dimethyl-4-hydroxyphenyl) sulfone, dihydroxybenzenes such as resorcinol, hydroquinone, halo- and alkylsubstituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl) sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153,008; all of which are incorporated herein by reference. It is, of course, possible to employ two or more different dihydric phenols or a combination of a dihydric phenol with glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl)-propane, 2,2-bis(4-hydroxy-3,5-dichlorophenyl)-propane, hydroquinone, and the like, or bishaloformates of glycols such as bishaloformates of ethylene glycol, and the like. While all of the above carbonate precursors are useful, carbonyl chloride, also known as phosgene, is preferred.

Also included within the scope of polycarbonates are the high molecular weight thermoplastic randomly branched polycarbonates. These randomly branched polycarbonates are prepared by co-reacting a polyfunctional organic compound with the afore-described dihydric phenols and carbonate precursor. The polyfunctional organic compounds useful in making the branched polycarbonates are set forth in U.S. Pat. Nos. 3,635,895 and 4,001,184 which are incorporated herein by reference. These polyfunctional compounds are generally aromatic and contain at least three functional groups which are carboxyl, carboxylic anhydrides, phenols, haloformyls or mixtures thereof. Some non-limiting examples of these polyfunctional aromatic compounds include 1,1,1-tri(4-hydroxyphenyl) ethane, trimellitic anhydride, trimellitic acid, trimellitoyl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride, and the like. The preferred polyfunctional aromatic compounds are 1,1,1-tri(4-hydroxyphenyl)ethane, trimellitic anhydride or trimellitic acid or their haloformyl derivatives. Also included herein are blends of a linear polycarbonate and a branched polycarbonate.

The polycarbonate resin treated in the process of the invention may be of relatively low weight average molecular weight or of relatively high weight average molecular weight (M_{w}). The lower M_{w} resins are generally end-capped polycarbonates.

The so-called "end-capped" polycarbonates are prepared by the above-described procedures of producing aromatic carbonate polymers, wherein the reaction mixture includes small amounts of molecular weight regulators or chain terminators to provide end or terminal groups on the carbonate polymer and thereby control the molecular weight of the polycarbonate.

A molecular weight regulator, i.e.; a chain stopper, is generally added to the reactants prior to or during the contacting of them with the carbonate precursor. Useful molecular weight regulators include, but are not limited to, monohydric phenols such as phenol, chroman-I, paratertiarybutylphenol, p-cumylphenol and the like.

Other compounds that act as chain terminators for the carbonate polymers are also known. Thus, U.S. Pat. No. 3,085,992 discloses alkanol amines as chain terminators; U.S. Pat. No. 3,399,172 teaches imides as chain terminators; U.S. Pat. No. 3,275,601 discloses that aniline and methyl aniline function as chain terminators in the interfacial polymerization process for producing polycarbonates; and U.S. Pat. No. 4,011,184 discloses primary and secondary amines as molecular weight regulators for polycarbonate. Furthermore, U.S. Pat. No. 3,028,365 discloses that aromatic amines and other monofunctional compounds can be used to control or regulate the molecular weight of the polycarbonates, thereby forming aryl carbamate terminal groups. Aromatic polycarbonates having carbamate end groups are disclosed in U.S. Pat. No. 4,111,910. These polycarbonates are prepared using a terminating amount of ammonia, ammonium compounds, primary cycloalkyl, aliphatic or aralkyl amines and secondary cycloalkyl, alkyl or aralkyl amines.

As mentioned above the aromatic carbonate polymers treated by the process of the invention include polyestercarbonates, also known as copolyester-polycarbonates, i.e., resins which contain, in addition to recurring polycarbonate chain units of the formula: 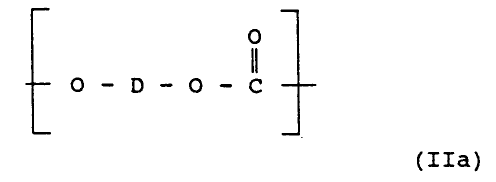 wherein D is a divalent aromatic radical of the dihydric phenol employed in the polymerization reaction, repeating or recurring carboxylate units, for example of the formula:

⁅ C(O) - R¹ - C(O) - O - D - O⁆ (IIb)

wherein D is as defined above and R¹ is as defined below.

The copolyester-polycarbonate resins are also prepared by interfacial polymerization technique, well known to those skilled in the art; see for example the U.S. patents 3,169,121 and 4,487,896.

In general the copolyester-polycarbonate resins are prepared as described above for the preparation of polycarbonate homopolymers, but by the added presence of a dicarboxylic acid (ester precursor) in the water immiscible solvent.

In general, any dicarboxylic acid conventionally used in the preparation of linear polyesters may be utilized in the preparation of the copolyester-carbonate resins. Generally, the dicarboxylic acids which may be utilized include the aliphatic dicarboxylic acids, the aromatic dicarboxylic acids, and the aliphatic-aromatic dicarboxylic acids. These acids are well known and are disclosed for example in U.S. Pat. No. 3,169,121 which is hereby incorporated herein by reference. Representative of such aromatic dicarboxylic acids are those represented by the general formula:

HOOC - R¹ - COOH (III)

wherein R¹ represents an aromatic radical such as phenylene, naphthylene, biphenylene, substituted phenylene and the like; a divalent aliphatic-aromatic hydrocarbon radical such as an aralkyl or alkaryl radical; or two or more aromatic groups connected through non-aromatic linkages of the formula:

- E -

wherein E is a divalent alkylene or alkylidene group. E may also consist of two or more alkylene or alkylidene groups, connected by a non-alkylene or alkylidene group, such as an aromatic linkage, a tertiary amino linkage, an ether linkage, a carbonyl linkage, a silicon-containing linkage, or by a sulfur-containing linkage such as sulfide, sulfoxide, sulfone and the like. In addition, E may be a cycloaliphatic group of five to seven carbon atoms, inclusive, (e.g. cyclopentyl, cyclohexyl), or a cycloalkylidene of five to seven carbon atoms, inclusive, such as cyclohexylidene. E may also be a carbon-free sulfur-containing linkage, such as sulfide, sulfoxide or sulfone; an ether linkage; a carbonyl group; a direct bond; a tertiary nitrogen group; or a silicon-containing linkage such as silane or siloxy. Other groups which E may represent will occur to those skilled in the art. For purposes of the present invention, the aromatic dicarboxylic acids are preferred. Thus, in the preferred aromatic difunctional carboxylic acids of the formula (III), R¹ is an aromatic radical such as phenylene, biphenylene, naphthylene, or substituted phenylene. Some non-limiting examples of aromatic dicarboxylic acids which may be used in preparing the poly(ester-carbonate) or polyarylate resins of the instant invention include phthalic acid, isophthalic acid, terephthalic acid, homophthalic acid, o-, m-, and p-phenylenediacetic acid, and the polynuclear aromatic acids such as diphenyl dicarboxylic acid, and isomeric naphthalene dicarboxylic acids. The aromatics may be substituted with an inorganic atom such as chlorine, bromine, fluorine and the like; an organic group such as the nitro group; an organic group such as alkyl; or an oxy group such as alkoxy, it being only necessary that the group be inert to and unaffected by the reactants and the reaction conditions. Particularly useful aromatic dicarboxylic acids are those represented by the general formula:- 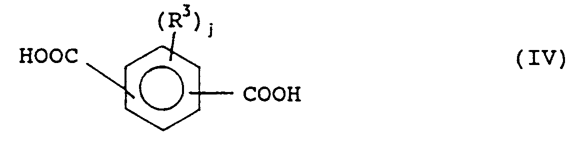 wherein j is a positive whole integer having a value of from 0 to 4 inclusive; and each R³ is independently selected from the group consisting of alkyl radicals, preferably lower alkyl (1 to about 6 carbon atoms).

Mixtures of these dicarboxylic acids may be employed. Therefore, where the term dicarboxylic acid is used herein it is to be understood that this term includes mixtures of two or more dicarboxylic acids.

Most preferred as aromatic dicarboxylic acids are isophthalic acid, terephthalic acid, and mixtures thereof.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyl dichloride, terephthaloyl dichloride, and mixtures thereof.

The proportions of reactants employed to prepare the copolyester-carbonate resins will vary in accordance with the proposed use of the blends of the invention containing this product resin. Those skilled in the art are aware of useful proportions, as described in the U.S. patents referred to above. In general, the amount of the ester bonds may be from about 5 to about 90 mole percent, relative to the carbonate bonds. For example, 5 moles of bisphenol A reacting completely with 4 moles of isophthaloyl dichloride and 1 mole of phosgene would give a copolyester-carbonate of 80 mole percent ester bonds.

The process of the invention employs the organic polymer resin in solution. In the instance of a polycarbonate resin, the solvent mixture is advantageously a water immiscible solvent such as methylene chloride but any solvent for the resin may be employed. The concentration of resin in the solution is not critical, but may be within the range of from about 1 to about 25 weight percent (as an example).

The polytetrafluoroethylene (PTFE) resin is preferably of a fibrillar form for use in the process and compositions of this invention.

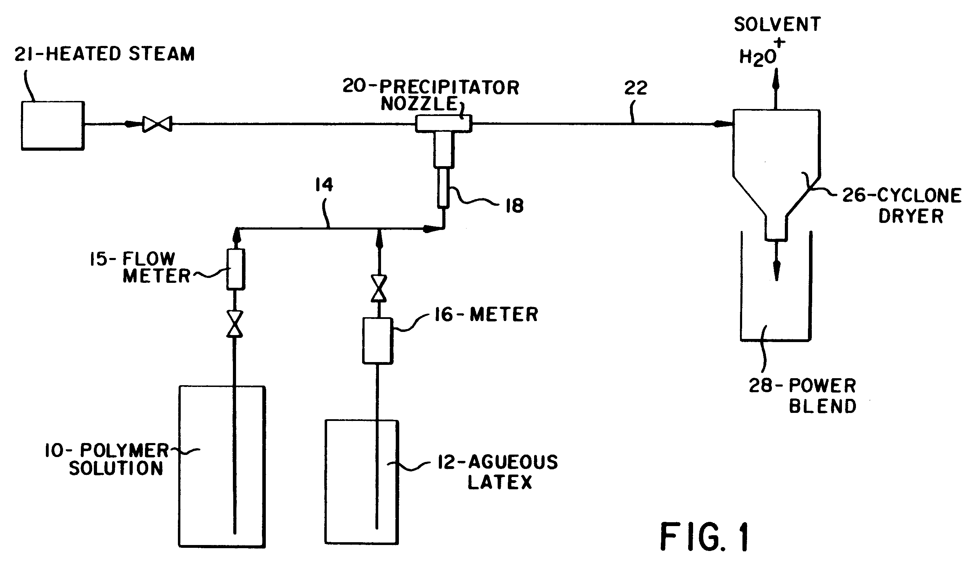

PTFE is a finely-divided powder or fluff as obtained from the preparative polymerization reaction. When a mass of this finely-divided, untreated polytetrafluoroethylene resin of average particle size 0.1 to 0.2 µm (micron), such as that illustrated in Figures 1 and 2 of the article "Teflon"; Tetrafluoroethylene Resin Dispersion by J.F. Lontz and W. B. Happoldt, Jr. in Ind. and Eng. Chem. vol. 44, p. 1800, 1952, is sheared by rubbing in the hands, the particles tend to stick together and form a coherent mass. If this mass is drawn out and examined with a microscope at 50-100X, it shows fibers of various sizes. Examination with an electron microscope shows that these fibers are bundles of smaller fibers, many of which consist of strings of the primary particles held together by very fine fibrils having diameters from one-fourth to one-tenth or less of the diameter of the particles. Polytetrafluoroethylene which has the ability of causing the particles to adhere and draw out into ultra fine fibrils when they are rubbed together with mechanical shearing, is preferred for use in the practice of this invention.

Microscopic examination of a product of this invention reveals the presence of resin encapsulated polytetrafluoroethylene particles. If desired, the polytetrafluoroethylene particles can be given a micro-fibrous structure before incorporation in the base resin by subjecting them to high rates of shear when dispersed in suitable medium such as oil, or in a process such as water-cutting, whereby microfibers having diameters of less than 2 microns are obtained.

The amount of PTFE which is incorporated into the polycarbonate resin by the process of the invention may be within the range of from about 0.01 to about 70% by weight, preferably from about 5 to about 40% and more preferably from about 15 to about 30% parts by weight.

The PTFE is preferably used as an aqueous dispersion or latex thereof, the dispersed particles having a preferred size (diameter) of from 0.05 to 0.5 microns (average). Addition of poorly dispersed PTFE to polycarbonate resin molding compositions adversely affects many other physical properties of the articles molded from them. The properties that can be adversely affected include impact resistance and appearance. One of the primary adverse defects that can occur is due to the presence of poorly dispersed large PTFE particles. These poorly dispersed particles can 1). act as flaws to initiate crack propagation, 2). give poor impact resistance, 3). act as large optically opaque second phase particles that appear as black spec contamination when viewed in transmission, or 4). appear at the surface of a molded article as surface appearance defects. It is this last problem which apparently was solved by the method described by Kress et al., described above. However, the first three problems have remained as difficulties in the art, until the present process was discovered.

We have discovered a process of introducing PTFE into polycarbonate resin molding compositions, which advantageously results in articles molded therefrom having defect-free surfaces and improved mechanical flammability characteristics. The method accomplishes the advantages, apparently, by encapsulating the PTFE with the resin composition, while forming relatively small and uniform particles of both resin and additive. The resulting resin-additive compositions are concentrates useful when blended with polycarbonate molding compositions as a fire-retarding, drip-inhibiting additive.

In accordance with the process of the invention, the two components, i.e., fluids containing the polycarbonate resin particles and separately the PTFE are mixed together for example, in a continuous tubular mixer optionally equipped with a static (motionless) mixer at ambient or elevated temperatures.

The rate at which the two fluids are brought in contact with each other is not critical to the process of the invention. However, the rate at which the two components are brought in contact with each other is advantageously at a substantially uniform rate over a given period of time. One advantageously avoids a "dumping" of the PTFE into the polycarbonate, but instead seeks to achieve a metering of the PTFE into the polycarbonate, to obtain a homogeneous mixture. The proportions of the two components may be in a weight ratio of from 70:30 to .01:99.99 (PTFE: polymer resin), preferably 40:60 to 5:95 and most preferably 30:70 to 15:85.

After admixture of the two fluid streams, co-precipitation of the resin and the additive is effected by simultaneous removal of the carrier for the additive and the solvent for the polymeric resin. This may be accomplished by volatilization of both the carrier for the additive (such as water) and the solvent for the polymeric resin (such as an organic solvent).

In the process of the invention, co-precipitation of the resin and the additive is carried out by steam precipitation, i.e. simultaneous removal of water and solvent by injection and release of steam into the mixture of ingredients, to achieve volatilization.

The invention will be better understood with reference to the following preparations and examples, which are presented for purposes of illustration rather than for limitation, and which set forth the best mode contemplated for carrying out the invention.

Where reported, the following test procedures were followed:

### Notched Izod (NI)

Impact on 3.175 mm (125 mil) thick molded samples was determined according to ASTM D-256; all specimens were 100% ductile at failure, unless otherwise noted.

### Flammability

Determined in accordance with the UL-94 5V method of Underwriter's Laboratory.

### Ductility Dynatup

Dynatup impact measurements were made in a Dynatup autoloader machine using 3.175 mm (125 mil) thick 10.16 cm discs. The tup impact velocity was 3.72 m/s (12.2 ft/sec) giving an impact energy of 201 Nm (148 ft-lb). The average energy to maximum load of three measurements was reported.

All parts are by weight unless otherwise stated. The term "phr" means parts per hundred of resin.

### Examples 1-4 and Control

With reference to the accompanying drawing, a number of preparations are carried out to add PTFE (as a drip inhibitor) to a polycarbonate resin (Lexan® 125, a homopolymer prepared by phosgenation of bisphenol-A, General Electric Company, Mount Vernon, Indiana, U.S.A., having an intrinsic viscosity of from about 0.4 to 0.5 deciliters/gram).

The PTFE is added as a 60% PTFE aqueous latex supplied by ICI as Fluon AD-1.. The polycarbonate is in the form of a 10% methylene chloride solution. The PTFE latex and polycarbonate solution are metered in concurrently from pressurized stainless steel vessels 10, 12 into the tubular mixer 14 as shown in the drawing. The polycarbonate solution was added at 1.5L per min. through flow meter 15 and the PTFE latex was added through meter 16 at a rate to give between 5 and 25 wt percent PTFE in the polycarbonate solution. The fluid streams were mixed in a multielement stationary mixer 18. The mixed fluids then enter a steam precipitation nozzle 20 where high pressure super heated steam 552 kPa (80 psi) is added at a rate of 36 kg/h (80 lbs/hr). from source 21. The high pressure (live) steam simultaneously vaporizes methylene chloride solvent and water carrier and the polycarbonate encapsulates the PTFE as they coprecipitate in conduit 22 where particle formation is completed to obtain a PTFE/polycarbonate concentrate. By this mode of coprecipitation, particle size ranging from 5 µm (micron) to 5 millimeter is typical and acceptable for this inventive process. A cyclone separator 26 then separates the concentrate powder from the bulk of the water and methylene chloride vapors. The precipitated powder is vacuum dried in a dryer 28 at 100®C and 8.0 kPa (60 mm Hg) for 48 hrs. to obtain a free-flowing powder with less than 1% moisture. It will be seen that separation and clean-up of the desired product is relatively simple and easy to carry out.

Two PTFE concentrates at PTFE loadings of 24% and 8% by weight were prepared. Each sample was used as a flame-retarding, drip-inhibiting additive in polycarbonate molding formulations in order to evaluate the influence of the PTFE on physical properties and flame retardant performance. The following Table I summarizes the formulations made. The formulations as shown in the Table I were blended, extruded and thermoplastically molded into test parts under the same molding conditions. Test results observed from molded parts are also given in the Table I. Also included is a control formulation which uses the PTFE concentrate prepared by adding PTFE latex to polycarbonate powder followed by blending and drying without coprecipitation by volatilization of fluids with steam. By this latter method, the PTFE has been found to be poorly dispersed in comparison to the products of the process of the invention and this poor dispersion is reflected in the physical properties of articles molded.

**Table I**

| Example: | 1 | 2 | 3 | 4 | Control |
|---|---|---|---|---|---|
| | | | | | |

| Formulation (% by Wgt) | | | | | |
|---|---|---|---|---|---|
| Lexan® 125, supra | 96.5 | 99.05 | 89.53 | 97.0 | 98.0 |
| PTFE | .84 | .24 | | | |
| PTFE | | | .84 | .24 | |
| PTFE | | | | | .4 |
| Mold release agent (phr) | 0.3 | 0.3 | 0.3 | 0.3 | 0.3 |
| KSS (A) (phr) | 0.05 | 0.05 | 0.05 | 0.05 | 0.05 |

| Test Results | | | | | |
|---|---|---|---|---|---|
| N. Izod (kg/cm²) | 1.08 | 1.02 | 1.08 | 0.98 | 1.00 |
| (% ductility) | 100 | 100 | 100 | 100 | 100 |
| Dynatup (kg/cm²) | 2.81 | 2.96 | 3.02 | 2.96 | 2.39 |
| (% ductility) | 100 | 100 | 100 | 100 | 100 |
| Tensile Elongation (%) | 104 | 105 | 109 | 96 | 63 |
| UL94 5V (3.2 mm) | pass | fail | pass | fail | fail |

| | | | | | |
|---|---|---|---|---|---|
| (A) Potassium salt of diphenylsulfone sulfonate, a fire retarding additive. | | | | | |

The Table I shows that formulations containing the PTFE concentrate prepared according to the invention give molded parts that are superior in physical properties. Moreover, there is practically no adverse change in properties when the PTFE level is raised from 0.24% to 0.84% using the concentrates prepared according to the invention (compare examples 1,3 with 2,4). That an additive does not adversely affect the physical property of a polymer is highly desirable. The increase in PTFE level allows achievement of the desirable UL94 5V performance (Examples 1 and 3) while preserving the good physical properties.

### Examples 5-12 and Comparative Examples A-E

The process of the invention according to Examples 1-4, supra. is repeated, using a variety of proportions of PTFE and Lexan® 125, polycarbonate, supra. The resulting admixtures of polycarbonate resin and PTFE were then formulated with 0.3 parts of a mold release agent and 0.05 parts of a heat stabilizer. Potassium salt of diphenylsulfone sulfonate fire retardant was added to some of the blends. Upon testing, the physical results obtained were reported in Table II, below, under Examples 5-12.

For purposes of comparison, formulations as described above were prepared, except that the PTFE was added to the polycarbonate resin by simply blending the PTFE latex with the powdered polycarbonate resin, followed by drying. In one example (comparative Example E), instead of PTFE in a latex, a dry powder of PTFE (Fluon®, CD-1, ICI) was blended with a resin powder of the polycarbonate. The test results and formulations are set forth also in the Table II, below, under comparative Examples A-E.

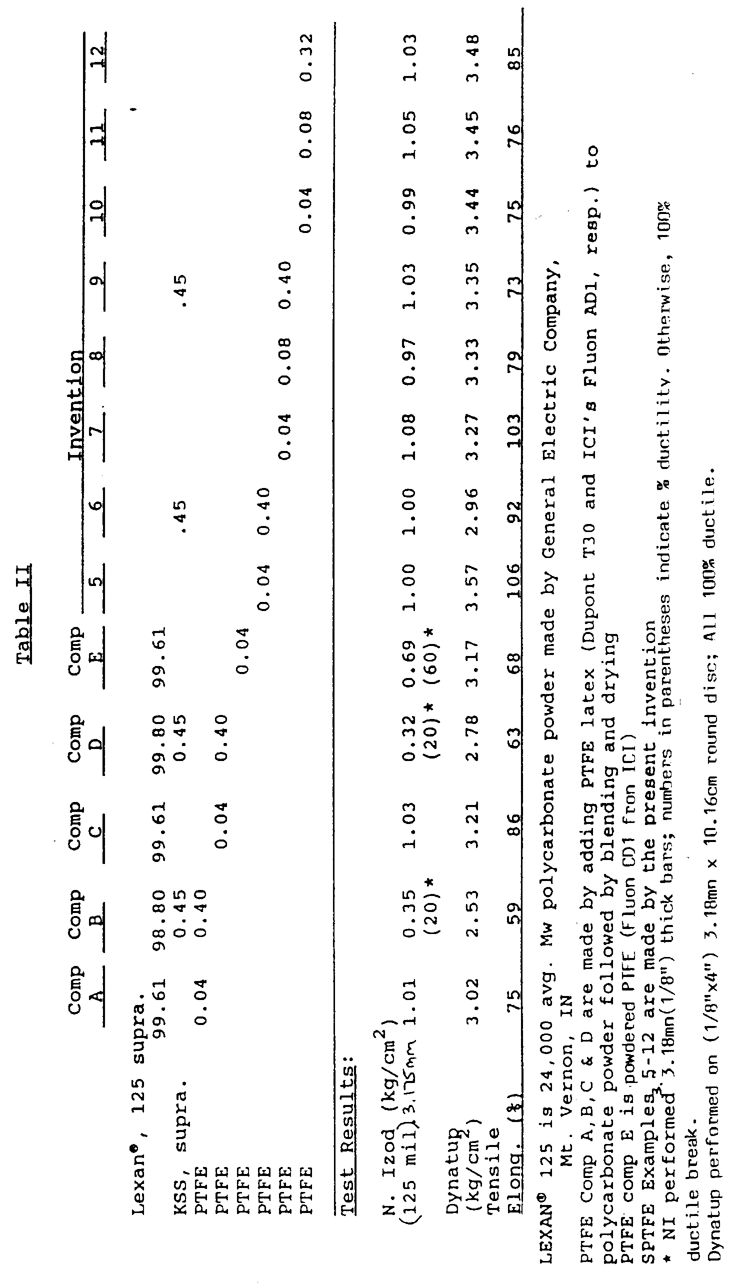

As may be observed from Table II, above, the process of the present invention permits one to achieve high weights of additive dispersion in a polymer resin, without substantial loss of physical properties associated with the polymer. In particular, the process allows for raising the level of PTFE in a polycarbonate formulation to enhance drip inhibition performance, without sacrificing mechanical properties in articles molded from the formulations.

Modifications may be made to the process of the invention as described above in relation to the dispersion of PTFE in a polycarbonate resin. For example, two or more additives may be dispersed in a given resin simultaneously. In general, any additives may be so dispersed, particularly if they are capable of being carried in a colloidal dispersion or as a solution for use in the process of the invention. Variables such as steam precipitation nozzle sizes, steam pressures, particle sizes, and ratios of components may all be adjusted to optimize results. The mixing of fluid streams and coprecipitation step may both be carried out at ambient temperatures and under atmospheric pressures although higher temperatures and pressures are not excluded.

## Claims

1. A process for incorporating a solid polytetrafluoroethylene additive in a highly dispersed manner into particles of a thermoplastic, synthetic, polymeric resin, which comprises:
providing a fluid mixture of the polytetrafluoroethylene additive;
providing a solution of the polymeric resin;
admixing the additive mixture with the polymeric resin solution; and
removing the fluid and the solvent from the admixture simultaneously by steam treatment, whereby there is a co-precipitation of the polytetrafluoroethylene additive and the polymeric resin from the admixture.

2. The process of claim 1 wherein the polymeric resin is one of general formula:-
(̵ A - B )̵ₙ
wherein n is an integer, greater than about 50; A is a divalent hydrocarbon moiety having a formula selected from 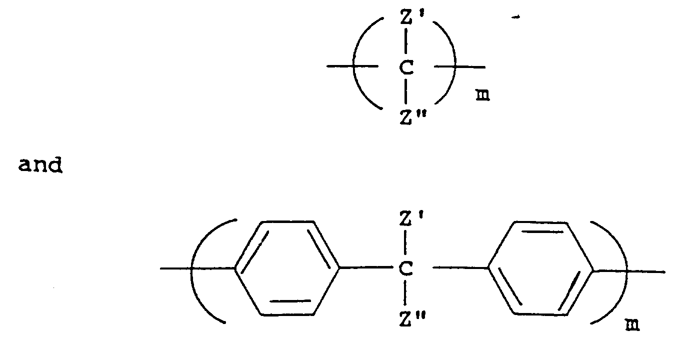 wherein m is an integer of between 1 and 20 and Z' and Z'' are each selected from hydrogen and alkyl; and B is a divalent connecting link selected from radicals which are represented by the formulae: 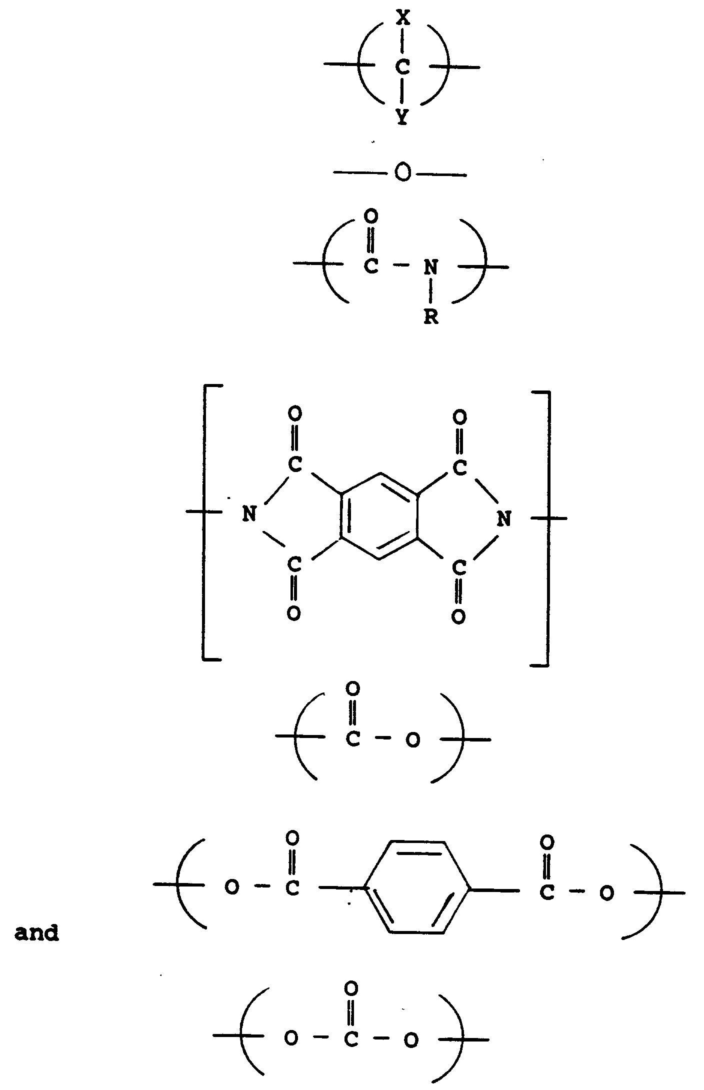 wherein X is selected from the group consisting of hydrogen, alkyl, aryl, and halogen, Y is selected from hydrogen, halogen, nitrile, carboxylate ester, alkoxy and acetal, and R is selected from hydrogen, alkyl, aryl, alkaryl, and alkoxymethyl.

3. The process of claim 1 wherein the fluid mixture is a colloidal dispersion.

4. The process of claim 1 wherein removal is effected by steam injection.

5. Process of claim 1 wherein admixing is carried out in a continuous fashion inside a tube equipped with a motionless mixer.

6. The process of claim 1 wherein the resin is a polycarbonate.

7. The process of claim 6 wherein the polytetrafluoroethylene is provided in an aqueous latex and the polycarbonate is provided in a water-immiscible solvent.

8. The process of claim 7 wherein the polytetrafluoroethylene additive and the resin are mixed in a weight ratio within the range of from about 70:30 to about 0.01:99.99.

## Patentansprüche

1. Verfahren zum Einarbeiten eines festen Polytetrafluorethylenadditivs in Partikel eines thermoplastischen synthetischen polymeren Harzes auf eine hochdisperse Art und Weise, bei welchem man:
eine Fluidmischung des Polytetrafluorethylenadditivs bereitstellt;
eine Lösung des polymeren Harzes bereitstellt;
die Additivmischung mit der polymeren Harzlösung mischt; und
das Fluid und das Lösungsmittel aus der Mischung simultan durch Dampfbehandlung entfernt, wobei es zu einer gemeinsamen Fällung des Polytetrafluorethylenadditivs und des polymeren Harzes aus der Mischung kommt.

2. Verfahren gemäß Anspruch 1, dadurch gekennzeichnet, daß das polymere Harz die allgemeine Formel hat:
(̵ A - B )̵ₙ
worin n eine ganze Zahl größer als etwa 50 ist; A ein divalenter Kohlenwasserstoffrest ist, der eine Formel hat, ausgewählt aus 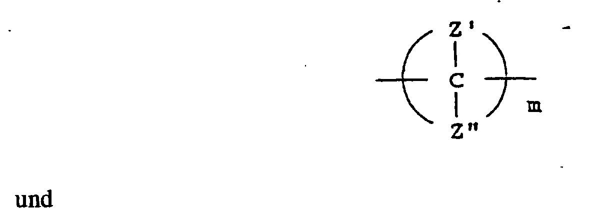 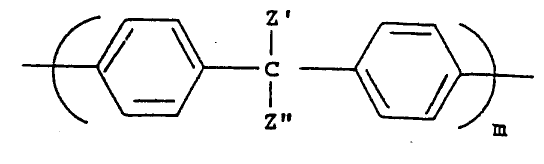 worin m eine ganze Zahl von zwischen 1 und 20 ist und Z' und Z'' jeweils ausgewählt sind aus Wasserstoff und Alkyl; und B ein divalentes verbindendes Glied ist, ausgewählt aus den Resten, die durch die Formel dargestellt werden: 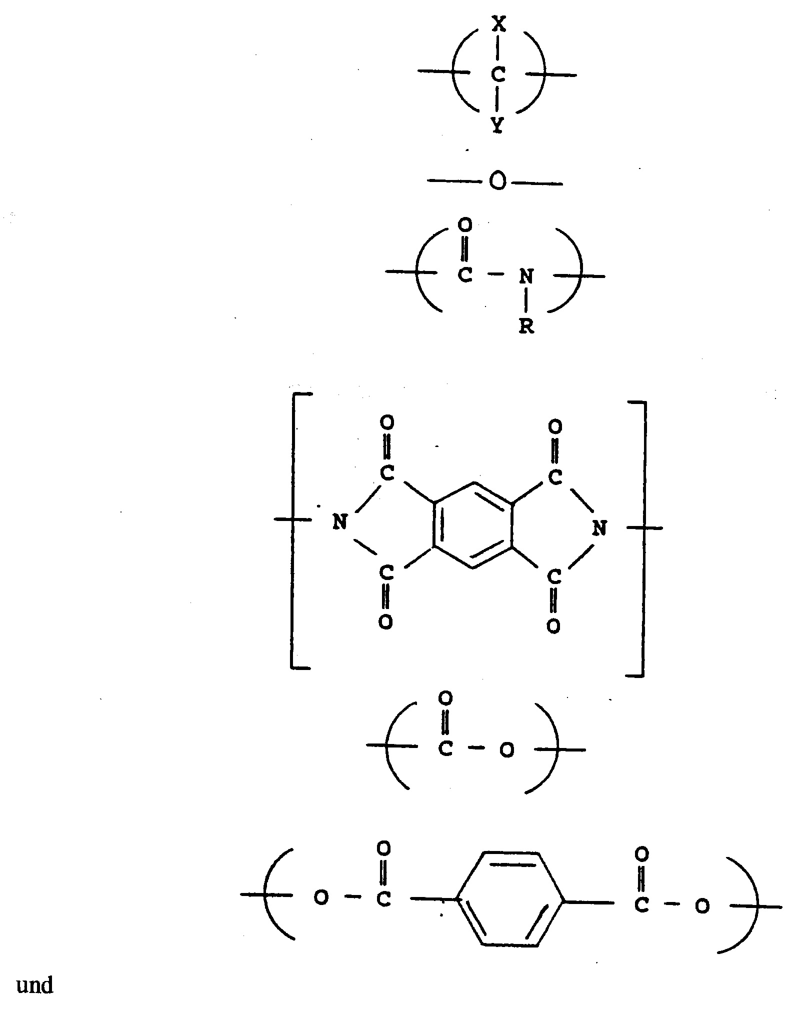 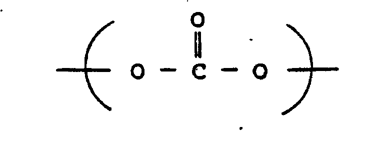 worin X ausgewählt ist aus der Gruppe bestehend aus Wasserstoff, Alkyl, Aryl, und Halogen, Y ausgewählt ist aus Wasserstoff, Halogen, Nitril, Carboxylatester, Alkoxy und Acetal, und R ausgewählt ist aus Wasserstoff, Alkyl, Aryl, Alkaryl, und Alkoxymethyl.

3. Verfahren gemäß Anspruch 1, dadurch gekennzeichnet, daß die Fluidmischung eine kolloidale Dispersion ist.

4. Verfahren gemäß Anspruch 1, dadurch gekennzeichnet, daß die Entfernung durch Dampfstimulation bewirkt wird.

5. Verfahren gemäß Anspruch 1, dadurch gekennzeichnet, daß das Vermischen auf eine kontinuierliche Art und Weise innerhalb eines Rohres durchgeführt wird, welches mit einem statischen Mixer ausgerüstet ist.

6. Verfahren gemäß Anspruch 1, dadurch gekennzeichnet, daß das Harz ein Polycarbonat ist.

7. Verfahren gemäß Anspruch 6, dadurch gekennzeichnet, daß das Polytetrafluorethylen in einem wässrigen Latex bereitgestellt wird und das Polycarbonat in einem nicht wassermischbaren Lösungsmittel bereitgestellt wird.

8. Verfahren gemäß Anspruch 7, dadurch gekennzeichnet, daß das Polytetrafluorethylenadditiv und das Harz in einem Gewichtsverhältnis innerhalb des Bereichs von zwischen etwa 70:30 bis etwa 0,01:99,99 gemischt werden.

## Revendications

1. Procédé pour disperser très finement un additif solide en polytétrafluoroéthylène dans des particules d'une résine polymérique synthétique thermoplastique comprenant les étapes consistant :
- à fournir un mélange fluide de l'additif en polytétrafluoroéthylène,
- à fournir une solution de la résine polymérique,
- à mélanger le mélange fluide de l'additif avec la solution de résine polymérique, et
- à éliminer simultanément le fluide et le solvant du mélange en traitant celui-ci à la vapeur, ce qui provoque une coprécipitation de l'additif en polytétrafluoroéthylène et de la résine polymérique à partir du mélange.

2. Procédé selon la revendication 1, dans lequel la résine polymérique est une résine correspondant à la formule générale
-(-A-B)ₙ-
dans laquelle n est un nombre entier supérieur à environ 50, A représente un groupe hydrocarboné divalent correspondant à une des formules suivantes : 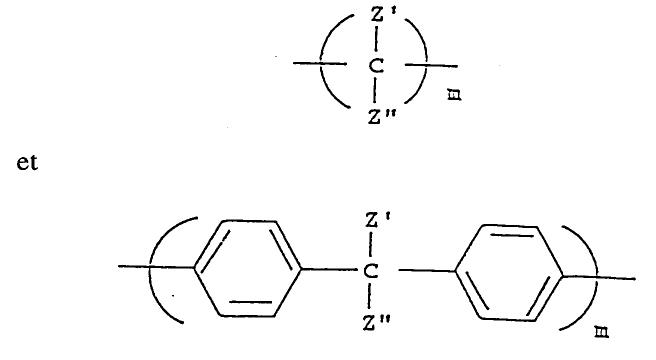 où m est un nombre entier compris entre 1 et 20 et Z' et Z'' sont choisis parmi un atome d'hydrogène et un groupe alkyle, et B est un élément de liaison divalent choisi parmi des radicaux qui sont représentés par les formules suivantes : 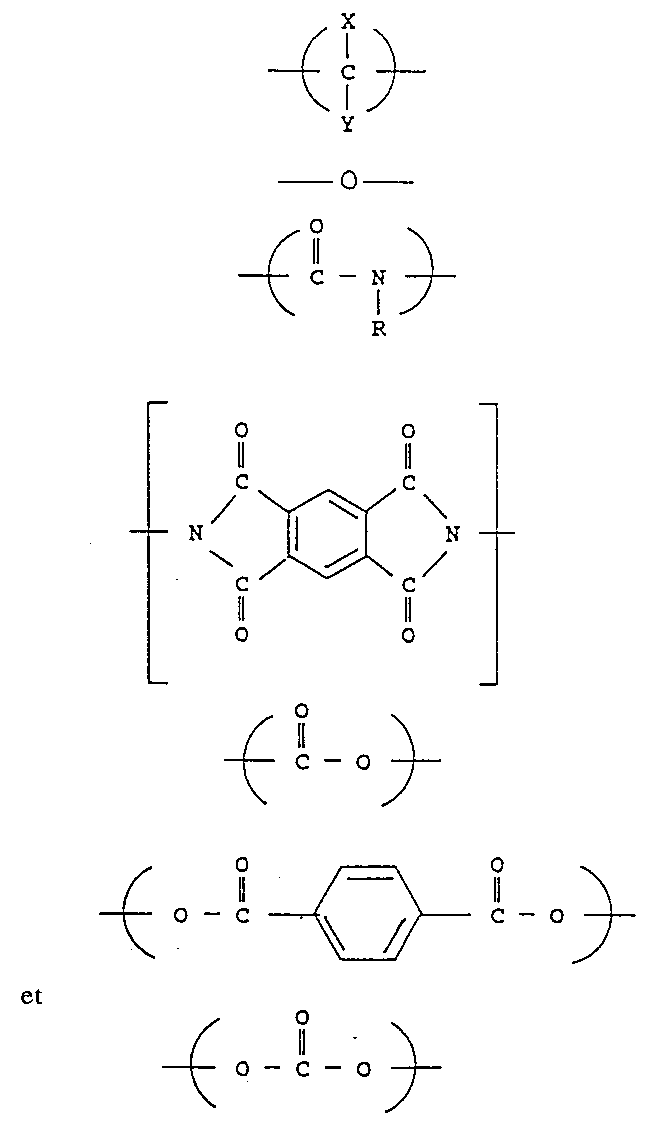 où X est choisi dans le groupe formé par un atome d'hydrogène , un groupe alkyle, un groupe aryle et un atome d'halogène, Y est choisi parmi un atome d'hydrogène ou d'halogène, un groupe nitrile, ester d'acide carboxylique, alcoxy et acétal, et R est choisi parmi un atome d'hydrogène, un groupe alkyle, aryle, alkaryle et alcoxyméthyle.

3. Procédé selon la revendication 1, dans lequel le mélange fluide est une dispersion colloïdale.

4. Procédé selon la revendication 1, dans lequel l'élimination se fait par injection de vapeur.

5. Procédé selon la revendication 1, dans lequel le mélange se fait en continu à l'intérieur d'un tube muni d'un mélangeur immobile.

6. Procédé selon la revendication 1, dans lequel la résine est un polycarbonate.

7. Procédé selon la revendication 6, dans lequel le polytétrafluoroéthylène est fourni sous forme d'un latex aqueux et le polycarbonate est fourni dans un solvant non miscible avec l'eau.

8. Procédé selon la revendication 7, dans lequel l'additif en polytétrafluoroéthylène et la résine sont mélangés avec un rapport en poids compris entre environ 70/30 et environ 0,01/99,99.
